(19) Europäisches Patentamt
European Patent Office
Office européen des brevets

(11) Veröffentlichungsnummer: **0 355 316 B1**

(12) **EUROPÄISCHE PATENTSCHRIFT**

(45) Veröffentlichungstag der Patentschrift: **28.09.94**

(51) Int. Cl.⁵: **B27K 3/15**, C08G 65/26

(21) Anmeldenummer: **89111550.3**

(22) Anmeldetag: **24.06.89**

# (54) Verfahren zum Konservieren von Holz und Holzwerkstoffen.

(30) Priorität: **16.08.88 DE 3827721**

(43) Veröffentlichungstag der Anmeldung:
**28.02.90 Patentblatt 90/09**

(45) Bekanntmachung des Hinweises auf die Patenterteilung:
**28.09.94 Patentblatt 94/39**

(84) Benannte Vertragsstaaten:
**AT BE CH DE ES FR GB IT LI NL SE**

(56) Entgegenhaltungen:
**EP-A- 0 049 017**
**EP-A- 0 090 117**
**WO-A-84/02701**
**DE-A- 3 718 012**
**US-A- 4 376 736**

(73) Patentinhaber: **RÜTGERSWERKE AKTIENGESELLSCHAFT**
**Mainzer Landstrasse 217**
**D-60326 Frankfurt (DE)**

(72) Erfinder: **Giebeler, Eberhard, Dr.**
**Ober Kippstrasse 21**
**D-6905 Schriesheim (DE)**
Erfinder: **Härtner, Helmut, Dr.**
**Konrad-Adenauer-Strasse 1**
**D-6940 Weinheim (DE)**
Erfinder: **Wehle, Detlef, Dr.**
**Ahornstrasse 8**
**D-8261 Kastl/Obb. (DE)**
Erfinder: **König, Franz**
**Geisenheimer Strasse 93**
**D-6000 Frankfurt-Main 71 (DE)**
Erfinder: **Berenbold, Helmut, Dr.**
**Eberleinstrasse 25**
**D-6200 Wiesbaden (DE)**

EP 0 355 316 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zum Konservieren von Holz und Holzwerkstoffen auf der Basis von quartären Ammoniumverbindungen.

Die Verwendung von quartären Ammoniumverbindungen sowohl in wasserlöslichen als auch in lösemittelhaltigen Holzschutzmitteln ist bekannt (Seifen-Öle-Fette-Wachse 109. Jahrgang Nr. 20, 1983, Seiten 603 bis 606).

Desgleichen ist bekannt, die an sich gute Schutzwirkung der quartären Ammoniumverbindungen durch Kombination mit anderen organischen und anorganischen Wirkstoffen zu steigern (z. B. DE-A 35 02 939, DE-A 36 21 360 oder DE-A 37 18 012).

All diese Mittel haben zwei Nachteile: Aufgrund der hohen Substantivität der quartären Ammoniumverbindungen haben diese, wenn sie mittels Tank- oder Sprühverfahren auf Holz aufgebracht werden, eine sehr geringe Eindringtiefe, die auch mit den verschiedensten Lösemitteln 1 bis 2 mm nicht übersteigt und somit die Zulassungsbedingungen des Instituts für Bautechnik, die die Wirksamkeit bei einer Eindringtiefe von mindestens 3 mm fordern, nicht erfüllen läßt.

Desweiteren ist die Verteilung der quartären Ammoniumverbindungen auf der Holzoberfläche sehr ungleichmäßig. Dieser sogenannte Spottingeffekt bringt eine partielle Anfälligkeit des so geschützten Holzes gegenüber Mikroorganismen.

Allgemein ist anerkannt, daß die Holzschutzwirkung umso sicherer ist, je tiefer und gleichmäßiger die Holzschutzmittel in das Holz eindringen.

Es ist daher Aufgabe der vorliegenden Erfindung, ein Verfahren zum Konservieren von Holz und Holzwerkstoffen bereitzustellen und anzuwenden, bei dem zwar einerseits die guten bioziden Eigenschaften der quartären Ammoniumverbindungen, andererseits aber eine gute Verteilung auf der Holzoberfläche und eine gute Eindringtiefe in das behandelte Holz erzielt werden.

Die Lösung der Aufgabe erfolgt durch ein Verfahren zum Konservieren von Holz gemäß der Ansprüche 1 bis 7 und die Verwendung der polymeren quartären Ammoniumborate im temporären Bläueschutz und im vorbeugenden Holzschutz gemäß der Ansprüche 8 und 9.

Es wurde gefunden, daß sich Lösungen oder Mikroemulsionen von polymeren quartären Ammoniumboraten in Wasser oder in organischen Lösemitteln als Konservierungsmittel für Holz eignen und die gestellten Forderungen bestens erfüllen. Neben einer erwarteten guten bioziden Wirkung verteilt sich polymeres quartäres Ammoniumborat gleichmäßig auf Holz und dringt tief in das Holz ein.

Dies ist insofern besonders überraschend, als das salzartige quartäre Ammoniumborat, hergestellt durch Umsetzung einer quartären Ammoniumverbindung mit Borsäure oder einem Borat, als Holzschutzmittel nahezu ungeeignet ist.

Bei der Kombination von quartären Ammoniumverbindungen mit Borsalzen ergeben sich Aussalzeffekte, die es unmöglich machen, entsprechende Konzentrate herzustellen. Aus der verdünnten wäßrigen Lösung verteilt sich das Ammoniumsalz, für quartäre Ammoniumverbindungen typisch, unregelmäßig auf der mit ihm behandelten Holzoberfläche ohne in das Holz einzudringen. Zudem ist das Borsalz auswaschbar.

Erfindungsgemäß eingesetzte polymere quartäre Ammoniumborate, die durch Umsetzung von Ethylenoxid oder Propylenoxid mit sekundären Aminen und Borsäure erhalten werden, sind dagegen mit Wasser und bestimmten organischen Lösemitteln in jedem Verhältnis mischbar und diese Lösungen oder Mikroemulsionen zeigen auf Holz die oben geschilderten Effekte. Überraschenderweise ist zudem das biozid wirksame Bor im Holz fixiert.

Die polymeren quartären Ammoniumborate werden erhalten durch gleichzeitige Umsetzung von Aminen der allgemeinen Formeln I und II

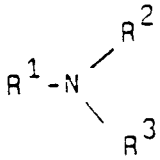 (I) ; 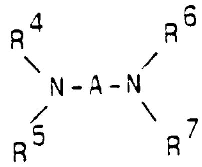 (II)

mit 2 bis 20 Mol Ethylen- oder Propylenoxid und 0,6 bis 1,5 Mol Borsäure, Borsäureestern oder Salzen der Borsäure, jeweils pro Mol Stickstoffäquivalent, wobei $R^1$ $C_8$-$C_{22}$-Alkyl oder $C_8$-$C_{22}$-Alkenyl bedeutet oder, wenn $R^2$ und $R^3$ Gruppen der Formel $-(C_2H_4O)_xH$ oder $-(C_3\text{-}H_6O)_xH$ darstellen, $R^1$ auch $C_1$-$C_4$-Alkyl

bedeuten kann,
$R^2$ Wasserstoff, $C_1$-$C_{22}$-Alkyl oder eine Gruppe der Formeln $-(C_2H_4O)_xH$, $-(C_3H_6O)_xH$ oder $-CH_2CH_2CH_2NH_2$ bedeutet,
$R^3$ Wasserstoff oder eine Gruppe der Formeln $-(C_2H_4O)_xH$, $-(C_3H_6O)_xH$ oder $-CH_2CH_2CH_2NH_2$ bedeutet,
$R^4$ und $R^6$ $C_1$–$C_4$-Alkyl oder ein Gruppe der Formeln $-(C_2H_4O)_xH$ oder $-(C_3H_6O)_xH$ bedeuten,
$R^5$ und $R^7$ eine Gruppe der Formel $-(C_2H_4O)_xH$ oder $-(C_3H_6O)_xH$,
A eine Gruppe der Formeln $-(CH_2)_n-$, $-(CH_2CH_2OCH_2CH_2)_n-$ oder $-(CH_2CH_2NHCH_2CH_2)_n-$ ,
x Zahlen von 1 bis 55 und
n eine ganze Zahl von 1 bis 20 bedeuten.

Als Amine der obigen Formeln sind folgende bevorzugt:

1. Amine der Formel I, wobei $R^1$ $C_8$-$C_{22}$-Alkyl, $R^2$ $C_8$-$C_{22}$-Alkyl oder $C_1$-$C_4$-Alkyl und $R^3$ Wasserstoff oder eine Gruppe der Formel $-(C_2H_4O)_xH$ oder $-(C_3H_6O)_xH$ bedeuten.
2. Amine der Formel I, wobei $R^1$ $C_8$-$C_{22}$-Alkyl, $R^2$ und $R^3$ Wasserstoff bedeuten.
3. Amine der Formel I, wobei $R^1$ $C_1$-$C_4$-Alkyl oder $C_8$-$C_{22}$-Alkyl und $R^2$ und $R^3$ Gruppen der Formel $-(C_2H_4O)_xH$ oder $-(C_3H_6O)_xH$ bedeuten, wobei die Summe der Ethylenoxid-Gruppen in beiden Resten $R^2$ und $R^3$ 2 bis 20 beträgt.
4. Amine der Formel I, wobei $R^1$ $C_8$-$C_{22}$-Alkyl, $R^2$ Wasserstoff oder eine Gruppe der Formel $-CH_2CH_2CH_2NH_2$ und $R^3$ eine Gruppe der Formel $-CH_2CH_2CH_2NH_2$ bedeuten.
5. Amine der Formel II, wobei A $R^4$, $R^5$, $R^6$ und $R^7$ die oben genannten Bedeutung haben und wobei die Summe aller Ethylenoxidgruppen 4 bis 30 beträgt.

Bei den Alkylenoxid-Gruppen der Formel $-(C_2H_4O)_xH$ und $-(C_3H_6O)_xH$ ist die Gruppe der Formel $-(C_2H_4O)_xH$bevorzugt. Anstelle der reinen Polyoxethylen- und Polyoxpropylen-Gruppen können auch solche Reste vorhanden sein, die sowohl aus Ethylenoxid- als auch aus Propylenoxid-Einheiten aufgebaut sind.

Die Umsetzung der Amine mit der Borsäure und dem Alkylenoxid erfolgt in der Weise, daß in einem Autoklaven das jeweilige Amin und die Borsäure vorgelegt und das Alkylenoxid zudosiert wird. Die Reaktionstemperatur beträgt im allgemeinen 60 bis 130 °C, vorzugsweise 60 bis 125 °C, insbesondere 60 bis 100 °C.

Der Reaktionsdruck beträgt 50 bis 600 kPa. Die Zudosierung erfolgt über einen Zeitraum von 1 bis 5 Stunden. Zur Nachreaktion wird das Gemisch bei dem angegebenen Druck 3 bis 12 Stunden auf einer Temperatur von 70 bis 120 °C, vorzugsweise 70 bis 100 °C gehalten.

Anstelle der Borsäure können auch deren Ester, wie z. B. Trimethylborsäureester, oder deren Salze, beispielsweise Na-Borat eingesetzt werden. Bei der Reaktion entstehen als Nebenprodukte Wasser und Polyglykole.

Analoge Umsetzungen von Aminen mit Borsäure oder anderen Borverbindungen sind aus EP-A 0 049 017, WO 84/02701 oder US-A 4 376 736 bekannt. Die resultierenden Produkte, die gemäß dieser Schriften als Schlichtemittel für Gewebe verwendet werden, werden als salzartige Ammoniumverbindungen mit Boratanionen bezeichnet.

Die erfindungsgemäß erhaltenen polymeren quartären Ammoniumverbindungen enthalten im wesentlichen als Strukturmerkmal Gruppen der Formel

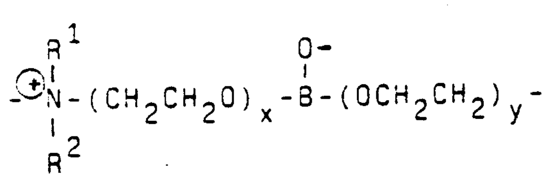

bzw. Gruppen der Formel

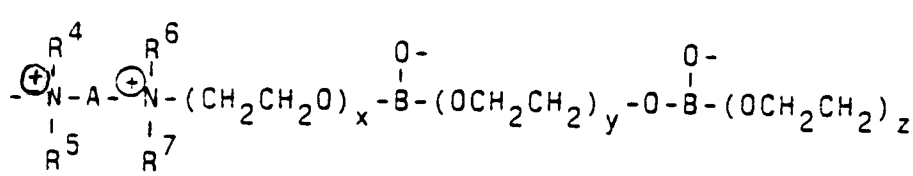

wenn die Reaktion mit Ethylenoxid gemacht wurde.

Die Anwesenheit polymerer bzw. oligomerer quartärer Ammoniumborate ergibt sich schon daraus, daß bei der Reaktion zwischen Aminen der Formeln I und II mit Borsäure und Alkylenoxid Wasser gebildet wird, wie die Beispiele zeigen.

Die polymeren quartären Ammoniumborate können mit Wasser verdünnt werden; sie sind gut löslich in Glykolen, Glykolethern, Ethern, niederen Alkoholen oder in Mischungen dieser Lösemittel mit Chloroform oder Methylenchlorid. Die Viskosität liegt zwischen 1 und 100 Pas, kann aber im Einzelfall bis 300 Pas erreichen. Die Viskosität der polymeren quartären Ammoniumborate ist abhängig von der Reaktionstemperatur, höhere Reaktionstemperaturen führen zu niedrigeren Viskositäten.

Nach Beendigung der Reaktion kann die erhaltene Rohlösung der polymeren quartären Ammoniumborate ohne weitere Reinigung und Aufarbeitung als Konzentrat direkt zu dem angegebenen Zweck eingesetzt werden, oder aber mit anderen, zusätzlichen bioziden Wirkstoffen und gegebenenfalls mit Pigmenten, Farbstoffen und anderen an sich bekannten Zusatzstoffen zu einem Konzentrat mit vergrößerter Wirkungsbreite weiterverarbeitet werden. Diese Rohlösung enthalten üblicherweise, bedingt durch deren Herstellung, etwa 6-12 % Wasser und etwa 8-12 % Glykole. Eine Entfernung dieser Nebenprodukte, speziell der Glykole, ist möglich, aber für die Praxis unnötig.

Zusätzliche biozide Wirkstoffe können sowohl organische Insektizide wie z. B. Pyrethroide, organisch Fungizide wie z. B. Isothiazoline oder anorganische Schutzsalze wie z. B. Kupfer-, Zink- oder Borsalze sein, wobei die anorganischen Salze nur in vorwiegend wäßrigen Zubereitungen und die organischen Wirkstoffe sowohl in wäßrigen als auch in vorwiegend wasserfreien Zubereitungen zum Einsatz kommen können.

Die erfindungsgemäß eingesetzten polymeren quartären Ammoniumborate sind mit Wasser beliebig verdünnbar, wobei sich stabile Mikroemulsionen bilden und Teilchengrößen der emulgierten polymeren quartären Ammoniumborate, die kleiner sind als die Kapillaren des Holzes. Durch Zusatz von 5-25 Gew.-% von mehrwertigen Alkoholen, insbesondere von Polypropylenglykol bilden sich als vorwiegend wäßrige Zubereitungen klare Lösungen mit verbesserter Eindringtiefe (3-4 mm in Kiefernholz) bei Tauch- und Tränkanwendung.

Die Mikroemulsionen und die vorwiegend wäßrigen Zubereitungen, die einen Gehalt von 3-7 Gew.-% an polymerem quartärem Ammoniumborat, bezogen auf die Gesamtmischung enthalten, eignen sich insbesondere für den temporären Bläueschutz. Sie werden dazu durch an sich bekannte Tauch-, Spritz- oder Streichverfahren appliziert.

Aufgrund der besseren Eindringtiefe eignen sich die vorwiegend wäßrigen Zubereitungen darüberhinaus für den vorbeugenden Holzschutz in Gefahrenklassen ohne und mit Erdkontakt - für die letztere Anwendung insbesondere dann, wenn die Lösung mittels Kesseldruckverfahren in das Holz eingebracht wird.

Die vorwiegend wasserfreien Zubereitungen der erfindungsgemäßen Mittel werden erhalten, indem die Konzentrate in einem Lösemittel oder bevorzugt einem Lösemittelgemisch gelöst werden.

Das bevorzugte Lösemittelgemisch besteht aus einer hochsiedenden Polyolkomponente wie z. B. Polyethylenglykol oder Di- oder Tripropylenglykolmethylether und einem Anteil eines oder mehrerer niedrigsiedender Lösemittel wie z. B. Hexan, Toluol, Cyclohexan, Chloralkane, Ketone oder niedere Alkohole. Hoch- und niedrigsiedende Lösemittelkomponenten werden im Verhältnis 1:4 - 1:10 eingesetzt.

Die fertigen Mittel haben einen Gehalt von 3-5 Gew.-% an polymerem quartärem Ammoniumborat sowie gegebenenfalls weitere Insektizide und Fungizide in an sich üblicher Konzentration.

Sie eignen sich als Anstrichmittel oder zur Anwendung in Tauch- und Kesseldruckverfahren. Bedingt durch die hohe Eindringtiefe der in den beschriebenen organischen Lösemitteln gelösten polymeren quartären Ammoniumverbindungen (mehr als 5 mm nach DIN 52 162) geben auch erfindungsgemäße Mittel ohne Zusatz weiterer biozider Wirkstoffe eine gute Holzschutzwirkung insbesondere gegen Bläuepilze und Basidiomyceten.

**Beispiele**

Beispiel 1

In einem 1 l Glasautoklaven legte man 194,4 g (0,80 mol) einer Mischung aus 9,6 % (n/n) Octylamin, 89 % (n/n) Dioctylamin und 1,4 % (n/n) Trioctylamin (Aminzahl: 230,9) und 49,4 g (0,80 mol) wasserfreie Borsäure vor und erwärmte unter Rühren auf 80 °C. Zu der dann flüssigen Reaktionsmischung dosierte man bei einer Innentemperatur von 80-100 °C innerhalb von 2,5 h 158 ml (3,20 mol) flüssiges Ethylenoxid so zu, daß der Innendruck einen Wert von 460 kPa nicht überstieg und ließ nach beendeter Zugabe noch 6 h nachreagieren. Nach dieser Zeit war der Druck auf 40 kPa abgefallen.

Das bei 25 °C flüssige und homogene Reaktionsprodukt wurde durch folgende analytische Werte charakterisiert: Viskosität (Haake RV 12, 25 °C, 25 °C,D = 21 $s^{-1}$):39 Pa•s, Wasser (K. Fischer): 10 %

(m/m), Ethylenglykol: 7,4 % (m/m), Diethylenglykol: 3,3 % (m/m), Triethylenglykol: 1,7 % (m/m), pH-Wert: 9,8. Aus einer Ethylenoxid-Bilanz errechnete sich ein statistischer Wert von 3 mol gebundenem Ethylenoxid pro Stickstoffequivalent.

Beispiel 2

In einem 1 l Glasautoklaven legte man 194,4 g (0,80 mol) einer Mischung aus 9,6 % (n/n) Octylamin, 89 % (n/n) Dioctylamin und 1,4 % (n/n) Trioctylamin (Aminzahl: 230,9) und 49,4 g (0,80 mol) wasserfreie Borsäure vor und erwärmte unter Rühren auf 80 °C. Anschließend dosierte man bei einer Innentemperatur von 80-86 °C innerhalb von 2 h 185,8 g (3,20 mol) flüssiges Propylenoxid zu, wobei der Druck 140-280 kPa betrug. Nach beendeter Zugabe ließ man noch 12 h bei 80-84 °C nachreagieren. Man erhielt ein flüssiges, farbloses, homogenes Reaktionsprodukt, das durch folgende Analysenwerte charakterisiert wurde: Viskosität: 117 mPa•s, Wasser, 9,0 %, Propylenglykol: 2,1 %, Dipropylenglykol: 3,2 %. Tripropylenglykol: 1,0 %. Aus einer Propylenoxid-Bilanz errechnete sich ein statistischer Wert von 2,6 mol gebundenem Propylenoxid pro Stickstoffequivalent.

Beispiel 3

In einem 1 l Glasautoklaven legte man 253,8 g (0,5 mol) Dipalmityl/Distearylamin (Gehalt an prim. Aminen 5,4 % (n/n), sek. Amine: 91,0 % (n/n), tert. Amine: 3,6 % (n/n); Aminzahl: 110,5) und 30,9 g (0,5 mol) wasserfreie Borsäure vor, erwärmte unter Rühren auf 80 °C und dosierte anschließend bei einer Temperatur von 82-88 °C innerhalb von 4,5 h 197,5 ml/176,2 g 4,0 mol) flüssiges Ethylenoxid zu, wobei ein Druck von max. 440 kPa erreicht wurde. Nach beendeter Zugabe ließ man noch 16 h bei 85-95 °C nachreagieren und brach dann die Reaktion ab. Man erhielt eine schwach gelbe, homogene, flüssige Reaktionsmischung, die durch folgende Analysenwerte charakterisiert wurde: Viskosität: 7,0 Pa•s, Wasser: 3,1 %, Ethylenglykol: 5,1 %, Diethylenglykol: 4,5 %, Triethylenglykol: 6,5 %, pH-Wert: 9,6. Aus einer Ethylenoxid-Bilanz errechnete sich ein statistischer Wert von 4,80 mol chemisch gebundenem Ethylenoxid pro Stickstoffequivalent.

Beispiel 4

In einem 1 l Glasautoklaven legte man 136,5 g (0,40 mol) geh.-Talgfett-alkyl-hydroxiethyl-methylamin (Aminzahl 149,4) und 24,7 g (0,40 mol) wasserfreie Borsäure vor, erwärmte auf 80 °C und dosierte dann innerhalb von 1,5 h 79 ml (70,5 g, 1,60 mol) flüssiges Ethylenoxid zu, wobei die Innentemperatur auf 88-92 °C anstieg (exothermer Effekt). Während der Zugabe betrug der Druck max. 280 kPa. Nach beendeter Zugabe ließ man noch 7 h bei 80-84 °C nachreagieren und brach dann die Reaktion ab. Man erhielt eine dunkelgelbe, flüssige, homogene Reaktionsmischung, die durch folgende Analysenwerte charakterisiert wurde: Viskosität: 1,4 Pa•s, Wasser: 7,5 %, Ethylenglykol: 7,5 %, Diethylenglykol: 1,1 %, Triethylenglykol: 0,9 %, pH-Wert: 9,7. Aus einer Ethylenoxid-Bilanz errechnete sich ein statistischer Wert von 3,0 mol chemisch gebundenem Ethylenoxid pro Stickstoffequivalent.

Beispiel 5

In einem 1 l Glasautoklaven legte man 136,5 g (0,40 mol) geh.-Talgfett-alkyl-hydroxiethyl-methylamin (Aminzahl 149,4) und 24,7 g (0,40 mol) wasserfreie Borsäure vor, erwärmte auf 80 °C und dosierte dann innerhalb von 1,5 h 104,3 ml (92,9 g, 1,60 mol) flüssiges Propylenoxid zu, wobei die Innentemperatur auf 88 °C anstieg. Während der Zugabe betrug der Druck max. 280 kPa. Nach beendeter Zugabe ließ man noch 16 h bei 80-86 °C nachreagieren und brach dann die Reaktion ab. Man erhielt eine hellgelbe, homogene, viskose Reaktionsmischung, die durch folgende Analysenwerte charakterisiert wurde: Viskosität: 20,6 Pa•s, Wasser: 6,1 %, Propylenglykol: 4,0 %, Dipropylenglykol: 4,0 %, Tripropylenglykol: 0,5 %, pH-Wert: 9,4. Aus einer Propylenoxid-Bilanz errechnete sich ein statistischer Wert von 3,2 mol chemisch gebundenem Propylenxid pro Stickstoffequivalent.

Beispiel 6

In einem 1 l Glasautoklaven legte man 105,3 g (0,80 mol) Octylamin (Aminzahl 428) und 49,4 g (0,80 mol) wasserfreie Borsäure vor, erwärmte auf 80 °C und dosierte bei einer Innentemperatur von 80-103 °C innerhalb von 3,5 h 316 ml (281,9 g, 6,40 mol) flüssiges Ethylenoxid zu, wobei ein Druck von max. 560 kPa

erreicht wurde. Nach beendeter Zugabe ließ man noch 5 h 80 °C nachreagieren und brach dann die Reaktion ab. Man erhielt eine dunkelgelbe, hochviskose, homogene Reaktionsmischung, die durch folgende Analysenwerte charakterisiert wurde: Viskosität: 64,2 Ps•s, Wasser: 9,0 %, Ethylenglykol: 7,3 % Diethylenglykol: 3,8 %, Triethylenglykol: 3,6 %, pH-Wert: 10,1. Aus einer Ethylenoxid-Bilanz errechnete sich ein statischer Wert von 3,15 mol gebundenem Ethylenoxid pro Stickstoffequivalent.

Beispiel 7

In einem 1 l Glasautoklaven legte man eine Mischung auf 95,80 g (0,80 mol) N-Methyl-diethanolamin und 49,40 g (0,80 mol) Borsäure in 51 g Isopropanol vor, erwärmte auf 80 °C und dosierte bei einer Temperatur von 80-93 °C innerhalb von 4,5 h 158 ml (141 g, 3,20 mol) flüssiges Ethylenoxid bei einem Druck von 80-460 kPa zu. Nach beendeter Reaktion ließ man noch 5 h nachreagieren (84-85 °C) und brach dann die Reaktion ab. Man erhielt eine dunkle, hochviskose, homogene Reaktionsmischung, die durch folgende Analysenwerte charakterisiert wurde: Viskosität: 71,6 Pa•s, Wasser: 16,4 %, Ethylenglykol: 6,3 %, Diethylenglykol: 1,0 %, Triethylenglykol: 0,7 %, pH-Wert: 10,1. Aus einer Ethylenoxid-Bilanz errechnete sich ein statistischer Wert von 3,55 mol chemisch gebundenem Ethylenoxid pro Stickstoffequivalent.

Beispiel 8

In einem 1 l Glasautoklaven legte man 114,2 g (0,30 mol) N-geh.-Talgalkyl-N,N-Bis(3-aminopropyl)amin (Equivalent-Aminzahl: 432) und 55,8 g (0,90 mol) Borsäure in 30,7 g 2-Propanol vor, erwärmte auf 80 °C und dosierte bei einer Innentemperatur von 80-90 °C innerhalb von 2 h bei einem Druck von 80-320 kPa 118,5 ml (105,7 g, 2,40 mol) Ethylenoxid zu. Nach beendeter Zugabe setzte man zur Absenkung der extrem hohen Viskosität nochmals 30,7 g 2-Propanol zu und ließ noch 10 h bei 80-85 °C nachreagieren. Man erhielt eine gelbe Reaktionsmischung, die durch folgende Analysenwerte charakterisiert wurde: Viskosität: 43,9 Pa•s, Wasser: 6,0 %, Ethylenglykol: 9,4 %, Diethylenglykol: 8,7 %, Triethylenglykol: 2,9 %, pH-Wert: 9,5. Aus einer Ethylenoxid-Bilanz errechnete sich ein statistischer Wert von 2,7 mol chemisch gebundenem Ethylenoxid pro Stickstoffequivalent.

Beispiel 9

In einem 1 l Glasautoklav legte man eine Mischung aus 231,2 g (0,80 mol) einer Mischung aus 8,7 % (n/n) Decylamin, 90,7 % (n/n) Didecylamin und 0,6 % (n/n) Tridecylamin (Aminzahl 194,1) und 49,5 g (0,80 mol) Borsäure vor, erwärmte auf 105 °C und dosierte anschließend bei einer Innentemperatur von 110-125 °C innerhalb von 2,5 h 158 ml (141 g, 3,20 mol) Ethylenoxid zu, wobei der Druck 120-480 kPa erreichte. Nach beendeter Zugabe ließ man noch 12 h bei 120 °C nachreagieren und brach dann die Reaktion ab. Man erhielt eine hellgelbe, homogene Reaktionsmischung, die durch folgende Analysenwerte charakterisiert wurde: Viskosität: 3,1 Pa•s, Wasser: 7,3 %, Ethylenglykol: 7,2 %, Diethylenglykol: 10,9 %, Triethylenglykol: 4,6 %, pH-Wert: 9,0. Aus einer Ethylenoxid-Bilanz errechnete sich ein statistischer Wert von 1,8 mol chemisch gebundenem Ethylenoxid pro Stickstoffequivalent.

Beispiel 10

In einem 1 l Glasautoklaven legte man 263,9 g (0,70 mol) Didecylamin + 1,8 mol Ethylenoxid (Reinheit 95 %) und 43,3 g (0,70 mol) wasserfreie Borsäure vor und erwärmte unter Rühren auf 80 °C. Anschließend dosierte man bei einer Innentemperatur von 74-90 °C innerhalb von 2,5 h 138,2 ml (123, 3 g, 2,80 mol) flüssiges Ethylenoxid zu. Während der Zugabe betrug der Innendruck 100-420 kPa. Nach beendeter Zugabe ließ man noch 8 h bei 84-86 °C nachreagieren (Druck bei Reaktionsende: 20 kPa) und brach dann die Reaktion ab. Die gelbe, homogene, viskose Reaktionsmischung wurde durch folgende Analysenwerte charakterisiert: Viskosität: 29,7 Pa•s, Wasser: 4,9 %, Ethylenglykol: 6,5 %, Diethylenglykol: 4,1 %, Triethylenglykol: 3,5 %, pH-Wert: 9,9. Aus einer Ethylenoxid-Bilanz errechnete sich ein statistischer Wert von 2,5 mol chemisch gebundenem Ethyloxid pro Stickstoffequivalent.

Beispiel 11

In einem 1 l Glasautoklaven legte man 1734 g (6,0 mol) einer Mischung aus 8,7 % (n/n) Decylamin, 90,7 % (n/n) Didecylamin und 0,6 % (n/n) Tridecylamin (Aminzahl 194) und 371 g (6,0 mol) wasserfreie Borsäure vor und erwärmte unter Rühren auf 75-80 °C. Anschließend dosierte man bei einer Innentemperatur von 80-88 °C innerhalb von 4,5 h 1185 ml (1057 g, 24 mol) flüssiges Ethylenoxid so zu, daß der Innendruck einen Wert von 500 kPa nicht überstieg und ließ nach beendeter Zugabe noch 10 h bei einer Temperatur von 75-80 °C nachreagieren. Innerhalb dieser Zeit war der Druck auf 60 kPa abgefallen. Man erhielt auf diese Weise eine bei 25 °C hochviskose, schwach gelbe, homogene Reaktionsmischung, die durch folgende Analysenwerte charakterisiert wurde: Viskosität: 96 Pa•s, Wasser: 6,9 %, Ethylenglykol: 6,7 %, Diethylenglykol: 2,8 %, Triethylenglykol: 1,9 %, pH-Wert: 10,1. Aus einer Ethylenoxid-Bilanz errechnete sich ein statistischer Wert von 3 mol chemisch gebundenem Ethylenoxid pro Stickstoffequivalent.

Beispiel 12

In einem 1 l Glasautoklav legte man 188,5 g (0,5 mol) Didecylamin + 1,8 mol Ethylenoxid (Reinheit 95 %, Aminzahl: 148,7) und 30,9 g (0,5 mol) wasserfreie Borsäure vor, erwärmte auf 75 °C und dosierte anschließend bei einer Temperatur von 75-86 °C innerhalb von 3 h 197,5 ml (176,2 g, 4 mol) Ethylenoxid zu, wobei ein Druck von maximal 560 kPa erreicht wurde. Nach beendeter Zugabe ließ man noch 7,5 h bei 84-86 °C nachreagieren und brach dann die Reaktion ab. Die gelbe, viskose, homogene Reaktionsmischung wurde durch folgende Analysenwerte charakterisiert: Viskosität: 8,0 Pa•s, Wasser: 3,2 %, Ethylenglykol: 5,3 %, Diethylenglykol: 4,2 %, Triethylenglykol: 6,2 %, pH-Wert: 10,0. Aus einer Ethylenoxid-Bilanz errechnete sich ein statistischer Wert von 5,9 mol chemisch gebundenem Ethylenoxid pro Stickstoffequivalent.

Beispiel 13

In einem 1 l Glasautoklaven legte man eine Mischung aus 206,5 g (0,70 mol) Didecylamin (Aminzahl 190,2) und 43,3 g (0,70 mol) Borsäure in 42,4 g Wasser vor, erwärmte auf eine Temperatur von 78 °C und dosierte anschließend bei einer Temperatur von 78-88 °C und einem Druck von 80-340 kPa innerhalb von 2,5 h 138,2 ml (123,3 g, 2,80 mol) flüssiges Ethylenoxid zu. Nach beendeter Zugabe ließ man noch 7 h bei 80 °C nachreagieren und brach dann die Reaktion ab. Die schwach gelbe, viskose, homogene Reaktionsmischung wurde durch folgende Analysenwerte characterisiert: Viskosität 3,8 Pa•s, Wasser: 18 %, Ethylenglykol: 5,4 %, Diethylenglykol: 2,3 %, Triethylenglykol: 1,4 %, pH-Wert: 10,0. Aus einer Ethylenoxid-Bilanz errechnete sich ein statistischer Wert von 3,1 mol chemisch gebundenem Ethylenoxid pro Stickstoffequivalent.

Beispiel 14

Eine Lösung aus
75 Gew.-% technischem, polymerem quartärem Ammoniumborat (PQAB) gemäß Beispiel 1
15 Gew.-% Polypropylenglykol
10 Gew.-% Isopropanol
wurde mit Wasser zu verschiedenen Proben verdünnt, mit einem Gehalt von 3, 4 und 5 Gew.-% an PQAB.

Kiefernholzproben wurden durch 1minütiges Tauchen in die jeweiligen Proben behandelt.

Die Eindringtiefe von PQAB, bestimmt nach DIN 52162, betrug 3 mm.

Die Wirksamkeit des Mittels als Bläueschutzmittel wurde in einem 3monatigen Feldversuch getestet.

Dabei zeigte sich, daß bereits die Probe mit 3 % PQAB einer Vergleichsprobe mit 2,5 % Pentachlorphenol-Natrium entsprach und nahezu keinen Pilzbefall zeigte, während eine unbehandelte Probe stark mit Bläue- und Schimmelpilzen befallen war.

Beispiel 15

Mit einer Probe aus
5 Gew.-% PQAB gemäß Beispiel 1
20 Gew.-% Dipropylenglykolmonoethylether
1,5 Gew.-% Permethrin
73,5 Gew.-% Testbenzin
wurden Kiefernholzproben durch 1minütiges Tauchen behandelt.

Die Eindringtiefe von PQAB, bestimmt nach DIN 52162, betrug 5,3 mm.

Die Wirksamkeit als vorbeugendes Holzschutzmittel wurde in einer mit Pilzsporen behafteten Prüfkammer bei 40 °C und 80 % r. F. getestet. Nach 3monatiger Prüfdauer war kein Befall der konservierten Holzproben festzustellen.

## Patentansprüche

1. Verfahren zum Konservieren von Holz und Holzwerkstoffen, **dadurch gekennzeichnet**, daß Holz und Holzwerkstoffe mit einem Mittel behandelt werden, das polymeres, quartäres Ammoniumborat enthält, das erhalten wird durch gleichzeitige Umsetzung von Aminen der allgemeinen Formeln I oder II

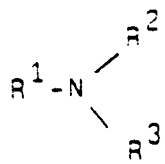 (I) ; 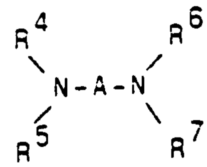 (II)

mit 2 bis 20 Mol Ethylen- oder Propylenoxid und 0,6 bis 1,5 Mol Borsäure, Borsäureestern oder Salzen der Borsäure, jeweils pro Mol Stickstoffäquivalent, wobei $R^1$ $C_8$-$C_{22}$-Alkyl oder $C_8$-$C_{22}$-Alkenyl bedeutet oder, wenn $R^2$ und $R^3$ Gruppen der Formel $-(C_2H_4O)_xH$ oder $-(C_3$-$H_6O)_xH$ darstellen, $R^1$ auch $C_1$-$C_4$-Alkyl bedeuten kann,
$R^2$ Wasserstoff, $C_1$-$C_{22}$-Alkyl oder eine Gruppe der Formeln $-(C_2H_4O)_xH$, $-(C_3H_6O)_xH$ oder $-CH_2CH_2CH_2NH_2$ bedeutet,
$R^3$ Wasserstoff oder eine Gruppe der Formeln $-(C_2H_4O)_xH$, $-(C_3H_6O)_xH$ oder $-CH_2CH_2CH_2NH_2$ bedeutet,
$R^4$ und $R^6$ $C_1-C_4$-Alkyl oder ein Gruppe der Formeln $-(C_2H_4O)_xH$ oder $-(C_3H_6O)_xH$ bedeuten,
$R^5$ und $R^7$ eine Gruppe der Formel $-(C_2H_4O)_xH$ oder $-(C_3H_6O)_xH$, A eine Gruppe der Formeln $-(CH_2)_n-$, $-(CH_2CH_2OCH_2CH_2)_n-$ oder $-(CH_2CH_2NHCH_2CH_2)_n-$,
x Zahlen von 1 bis 55 und n eine ganze Zahl von 1 bis 20 bedeuten.

2. Verfahren nach Anspruch 1, **dadurch gekennzeichnet**, daß Holz und Holzwerkstoffe mit einem Mittel behandelt werden, das weitere biozide Wirkstoffe enthält.

3. Verfahren nach den Ansprüchen 1 oder 2, **dadurch gekennzeichnet**, daß das polymere quartäre Ammoniumborat in Form einer Mikroemulsion in Wasser eingesetzt wird.

4. Verfahren nach den Ansprüchen 1 oder 2, **dadurch gekennzeichnet**, daß das Mittel in Form einer Lösung in einem organischen Lösemittel eingesetzt wird.

5. Verfahren nach den Ansprüchen 1 und 2, **dadurch gekennzeichnet**, daß das Mittel in Form einer wäßrig-alkoholischen Lösung eingesetzt wird.

6. Verfahren nach den Ansprüchen 1 und 2, **dadurch gekennzeichnet**, daß das Mittel im Tauch-, Spritz- oder Streichverfahren appliziert wird.

7. Verfahren nach den Ansprüchen 1 und 2, **dadurch gekennzeichnet**, daß das Mittel mittels Kesseldruckverfahren in das Holz eingebracht wird.

8. Verwendung von polymerem, quartärem Ammoniumborat, das erhalten wird durch gleichzeitige Umsetzung von Aminen der allgemeinen Formeln I oder II

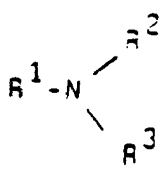 (I) ; 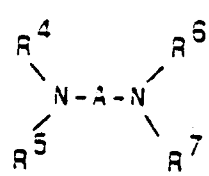 (II)

mit 2 bis 20 Mol Ethylen- oder Propylenoxid und 0,6 bis 1,5 Mol Borsäure, Borsäureestern oder Salzen der Borsäure, jeweils pro Mol Stickstoffäquivalent, wobei $R^1$ $C_8$-$C_{22}$-Alkyl oder $C_8$-$C_{22}$-Alkenyl bedeutet

oder, wenn $R^2$ und $R^3$ Gruppen der Formel $-(C_2H_4O)_xH$ oder $-(C_3-H_6O)_xH$ darstellen, $R^1$ auch $C_1$-$C_4$-Alkyl bedeuten kann,
$R^2$ Wasserstoff, $C_1$-$C_{22}$-Alkyl oder eine Gruppe der Formeln $-(C_2H_4O)_xH$, $-(C_3H_6O)_xH$ oder $-CH_2CH_2CH_2NH_2$ bedeutet,
$R^3$ Wasserstoff oder eine Gruppe der Formeln $-(C_2H_4O)_xH$, $-(C_3H_6O)_xH$ oder $-CH_2CH_2CH_2NH_2$ bedeutet,
$R^4$ und $R^6$ $C_1$–$C_4$-Alkyl oder ein Gruppe der Formeln $-(C_2H_4O)_xH$ oder $-(C_3H_6O)_xH$ bedeuten,
$R^5$ und $R^7$ eine Gruppe der Formel $-(C_2H_4O)_xH$ oder $-(C_3H_6O)_xH$, A eine Gruppe der Formeln $-(CH_2)_n-$, $-(CH_2CH_2OCH_2CH_2)_n-$ oder $-(CH_2CH_2NHCH_2CH_2)_n-$,
x Zahlen von 1 bis 55 und n eine ganze Zahl von 1 bis 20 bedeuten, zum temporären Bläueschutz.

9. Verwendung von polymerem, quartärem Ammoniumborat, das erhalten wird durch gleichzeitige Umsetzung von Aminen der allgemeinen Formeln I oder II

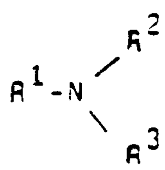 (I) ; 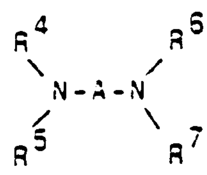 (II)

mit 2 bis 20 Mol Ethylen- oder Propylenoxid und 0,6 bis 1,5 Mol Borsäure, Borsäureestern oder Salzen der Borsäure, jeweils pro Mol Stickstoffäquivalent, wobei $R^1$ $C_8$-$C_{22}$-Alkyl oder $C_8$-$C_{22}$-Alkenyl bedeutet oder, wenn $R^2$ und $R^3$ Gruppen der Formel $-(C_2H_4O)_xH$ oder $-(C_3-H_6O)_xH$ darstellen, $R^1$ auch $C_1$-$C_4$-Alkyl bedeuten kann,
$R^2$ Wasserstoff, $C_1$-$C_{22}$-Alkyl oder eine Gruppe der Formeln $-(C_2H_4O)_xH$, $-(C_3H_6O)_xH$ oder $-CH_2CH_2CH_2NH_2$ bedeutet,
$R^3$ Wasserstoff oder eine Gruppe der Formeln $-(C_2H_4O)_xH$, $-(C_3H_6O)_xH$ oder $-CH_2CH_2CH_2NH_2$ bedeutet,
$R^4$ und $R^6$ $C_1$–$C_4$-Alkyl oder ein Gruppe der Formeln $-(C_2H_4O)_xH$ oder $-(C_3H_6O)_xH$ bedeuten,
$R^5$ und $R^7$ eine Gruppe der Formel $-(C_2H_4O)_xH$ oder $-(C_3H_6O)_xH$, A eine Gruppe der Formeln $-(CH_2)_n-$, $-(CH_2CH_2OCH_2CH_2)_n-$ oder $-(CH_2CH_2NHCH_2CH_2)_n-$ ,
x Zahlen von 1 bis 55 und n eine ganze Zahl von 1 bis 20 bedeuten, zum vorbeugenden Holzschutz.

## Claims

1. A method of preserving wood and wood materials, **characterized in that** wood and wood materials are treated with an agent containing polymeric quaternary ammonium borate which is obtained by the simultaneous reaction of amines of the general formulae I or II

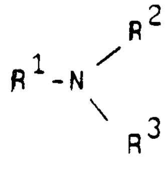 (I) ; 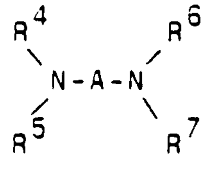 (II)

having from 2 to 20 mol of ethylene or propylene oxide and from 0·6 to 1·5 mol of boric acid, esters of boric acid or salts of boric acid, in each case *per* mol of nitrogen equivalent, wherein $R^1$ represents a $C_8$ to $C_{22}$ alkyl or a $C_8$ to $C_{22}$ alkenyl, or, if $R^2$ and $R^3$ represent groups of the formulae $-(C_2H_4O)_xH$ or $-(C_3H_6O)_xH$, $R^1$ can also represent a $C_1$ to $C_4$ alkyl,
$R^2$ represents hydrogen, a $C_1$ to $C_{22}$ alkyl or a group of the formulae $-(C_2H_4O)_xH$, $-(C_3H_6O)_xH$ or $-CH_2CH_2CH_2NH_2$,
$R^3$ represents hydrogen or a group of the formulae $-(C_2H_4O)_xH$, $-(C_3H_6O)_xH$ or $-CH_2CH_2CH_2NH_2$,
$R^4$ and $R^6$ represent a $C_1$ to $C_4$ alkyl or a group of the formulae $-(C_2H_4O)_xH$ or $-(C_3H_6O)_xH$,

$R^5$ and $R^7$ represent a group of the formulae $-(C_2H_4O)_xH$ or $-(C_3H_6O)_xH$,
A represents a group of the formulae $-(CH_2)_n-$, $-(CH_2CH_2OCH_2CH_2)_n-$ or $-(CH_2CH_2NHCH_2CH_2)_n-$ and
**x** represents numbers from 1 to 55 and **n** an integer from 1 to 20.

2. A method according to Claim 1, **characterized in that** wood and wood materials are treated with an agent containing further biocidal active ingredients.

3. A method according to Claim 1 or 2, **characterized in that** the polymeric quaternary ammonium borate is used in the form of a microemulsion in water.

4. A method according to Claim 1 or 2, **characterized in that** the agent is used in the form of a solution in an organic solvent.

5. A method according to Claims 1 and 2, **characterized in that** the agent is used in the form of an aqueous-alcoholic solution.

6. A method according to Claims 1 and 2, **characterized in that** the agent is applied in an immersion, spraying or brushing process.

7. A method according to Claims 1 and 2, **characterized in that** the agent is introduced into the wood by means of pressure-impregnation processes.

8. Use of polymeric quaternary ammonium borate which is obtained by the simultaneous reaction of amines of the general formulae I or II

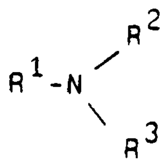 (I) ; 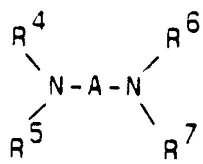 (II)

having from 2 to 20 mol of ethylene or propylene oxide and from 0·6 to 1·5 mol of boric acid, esters of boric acid or salts of boric acid, in each case *per* mol of nitrogen equivalent, wherein $R^1$ represents a $C_8$ to $C_{22}$ alkyl or a $C_8$ to $C_{22}$ alkenyl, or, if $R^2$ and $R^3$ represent groups of the formulae $-(C_2H_4O)_xH$ or-$(C_3H_6O)_xH$, $R^1$ can also represent a $C_1$ to $C_4$ alkyl,
$R^2$ represents hydrogen, a $C_1$ to $C_{22}$ alkyl or a group of the formulae $-(C_2H_4O)_xH$, $-(C_3H_6O)_xH$ or $-CH_2CH_2CH_2NH_2$,
$R^3$ represents hydrogen or a group of the formulae $-(C_2H_4O)_xH$, $-(C_3H_6O)_xH$ or $-CH_2CH_2CH_2NH_2$,
$R^4$ and $R^6$ represent a $C_1$ to $C_4$ alkyl or a group of the formulae $-(C_2H_4O)_xH$ or $-(C_3H_6O)_xH$,
$R^5$ and $R^7$ represent a group of the formulae $-(C_2H_4O)_xH$ or $-(C_3H_6O)_xH$,
A represents a group of the formulae $-(CH_2)_n-$, $-(CH_2CH_2OCH_2CH_2)_n-$ or $-(CH_2CH_2NHCH_2CH_2)_n-$ and
**x** represents numbers from 1 to 55 and **n** an integer from 1 to 20, for temporary protection from blue staining.

9. Use of polymeric quaternary ammonium borate which is obtained by the simultaneous reaction of amines of the general formulae I or II

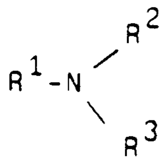 (I) ; 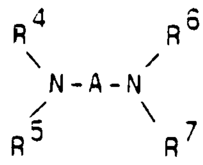 (II)

having from 2 to 20 mol of ethylene or propylene oxide and from 0·6 to 1·5 mol of boric acid, esters of boric acid or salts of boric acid, in each case *per* mol of nitrogen equivalent, wherein $R^1$ represents a

$C_8$ to $C_{22}$ alkyl or a $C_8$ to $C_{22}$ alkenyl, or, if $R^2$ and $R^3$ represent groups of the formulae $-(C_2H_4O)_xH$ or $-(C_3H_6O)_xH$, $R^1$ can also represent a $C_1$ to $C_4$ alkyl,
$R^2$ represents hydrogen, a $C_1$ to $C_{22}$ alkyl or a group of the formulae $-(C_2H_4O)_xH$, $-(C_3H_6O)_xH$ or $-CH_2CH_2CH_2NH_2$,
$R^3$ represents hydrogen or a group of the formulae $-(C_2H_4O)_xH$, $-(C_3H_6O)_xH$ or $-CH_2CH_2CH_2NH_2$,
$R^4$ and $R^6$ represent a $C_1$ to $C_4$ alkyl or a group of the formulae $-(C_2H_4O)_xH$ or $-(C_3H_6O)_xH$,
$R^5$ and $R^7$ represent a group of the formulae $-(C_2H_4O)_xH$ or $-(C_3H_6O)_xH$,
A represents a group of the formulae $-(CH_2)_n-$, $-(CH_2CH_2OCH_2CH_2)_n-$ or $-(CH_2CH_2NHCH_2CH_2)_n-$ and
**x** represents numbers from 1 to 55 and **n** an integer from 1 to 20, for preventive wood protection.

## Revendications

1. Procédé pour la conservation du bois et des matériaux dérivés du bois, caractérisé en ce que le bois et les matériaux dérivés du bois sont traités à l'aide d'un agent contenant du borate d'ammonium quaternaire polymère qui est obtenu par réaction simultanée d'amines de formule générale I ou II

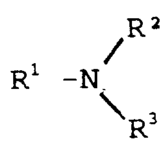 (I) ; 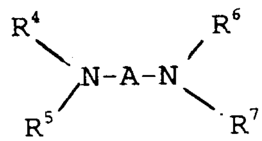 (II)

avec 2 à 20 moles d'oxyde d'éthylène ou de propylène et 0,6 à 1,5 moles d'acide borique, d'esters boriques ou de sels de l'acide borique pour chaque mole d'équivalent d'azote, auquel cas $R^1$ signifie un alkyle en $C_8$ à $C_{22}$ ou un alcényle en $C_8$ à $C_{22}$ ou, lorsque $R^2$ et $R^3$ représentent des groupes de formule $-(C_2H_4O)_xH$ ou $-(C_3H_6O)_xH$, $R^1$ peut également signifier un alkyle en $C_1$ à $C_4$,
$R^2$ signifie l'hydrogène, un alkyle en $C_1$ à $C_{22}$ ou un groupe de formule $-(C_2H_4O)_xH$, $-(C_3H_6O)_xH$ ou $-CH_2CH_2CH_2NH_2$,
$R^3$ signifie l'hydrogène ou un groupe de formule $-(C_2H_4O)_xH$, $-(C_3H_6O)_xH$ ou $-CH_2CH_2CH_2NH_2$ ,
$R^4$ et $R^6$ signifient un alkyle en $C_1$ à $C_4$ ou un groupe de formule $-(C_2H_4O)_xH$ ou $-(C_2H_6O)_xH$,
$R^5$ et $R^7$ signifient un groupe de formule $-(C_2H_4O)_xH$ ou $-(C_3H_6O)_xH$, A un groupe de formule $-(CH_2)_n-$, $-(CH_2CH_2\ OCH_2CH_2)_n-$ ou $-(CH_2CH_2NHCH_2CH_2)_n-$,
x représente des nombres de 1 à 55 et n un nombre entier de 1 à 20.

2. Procédé selon la revendication 1, caractérisé en ce que du bois et des matériaux dérivés du bois sont traités à l'aide d'un agent qui contient des substances actives biocides additionnelles.

3. Procédé selon la revendication 1 ou 2, caractérisé en ce que le borate d'ammonium quaternaire polymère est mis en oeuvre sous là forme d'une micro-émulsion dans de l'eau.

4. Procédé selon la revendication 1 ou 2, caractérisé en ce que l'agent est mis en oeuvre sous la forme d'une solution dans un solvant organique.

5. Procédé selon les revendications 1 et 2, caractérisé en ce que l'agent est mis en oeuvre sous la forme d'une solution hydro-alcoolique.

6. Procédé selon les revendications 1 et 2, caractérisé en ce que l'agent est appliqué selon le procédé au trempé, par pulvérisation ou par enduction à la brosse.

7. Procédé selon les revendications 1 et 2, caractérisé en ce que l'agent est introduit dans le bois au moyen du procédé de la cuve sous pression.

8. Utilisation de borate d'ammonium quaternaire polymère qui est obtenu par réaction simultanée d'amines de formule générale I ou II

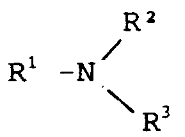 (I) ; 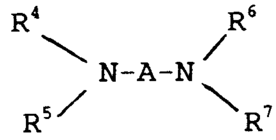 (II)

avec 2 à 20 moles d'oxyde d'éthylène ou de propylène et 0,6 à 1,5 moles d'acide borique, d'esters boriques ou de sels de l'acide borique pour chaque mole d'équivalent d'azote, auquel cas $R^1$ signifie un alkyle en $C_8$ à $C_{22}$ ou un alcényle en $C_8$ à $C_{22}$ ou, lorsque $R^2$ et $R^3$ représentent des groupes de formule $-(C_2H_4O)_xH$ ou $-(C_3H_6O)_xH$, $R^1$ peut également signifier un alkyle en $C_1$ à $C_4$,

$R^2$ signifie l'hydrogène, un alkyle en $C_1$ à $C_{22}$ ou un groupe de formule $-(C_2H_4O)_xH$, $-(C_3H_6O)_xH$ ou $-CH_2CH_2CH_2NH_2$,

$R^3$ signifie l'hydrogène ou un groupe de formule $-(C_2H_4O)_xH$, $-(C_3H_6O)_xH$ ou $-CH_2CH_2CH_2NH_2$ ,

$R^4$ et $R^6$ signifient un alkyle en $C_1$ à $C_4$ ou un groupe de formule $-(C_2H_4O)_xH$ ou $-(C_2H_6O)_xH$,

$R^5$ et $R^7$ signifient un groupe de formule $-(C_2H_4O)_xH$ ou $-(C_3H_6O)_xH$, A un groupe de formule $-(CH_2)_n-$, $-(CH_2CH_2\ OCH_2CH_2)_n-$ ou $-(CH_2CH_2NHCH_2CH_2)_n-$,

x représente des nombres de 1 à 55 et n un nombre entier de 1 à 20, pour la protection temporaire contre la pourriture bleue.

**9.** Utilisation de borate d'ammonium quaternaire polymère qui est obtenu par réaction simultanée d'amines de formule générale I ou II

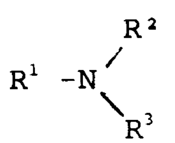 (I) ; 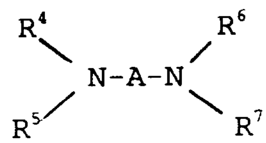 (II)

avec 2 à 20 moles d'oxyde d'éthylène ou de propylène et 0,6 à 1,5 moles d'acide borique, d'esters boriques ou de sels de l'acide borique pour chaque mole d'équivalent d'azote, auquel cas $R^1$ signifie un alkyle en $C_8$ à $C_{22}$ ou un alcényle en $C_8$ à $C_{22}$ ou, lorsque $R^2$ et $R^3$ représentent des groupes de formule $-(C_2H_4O)_xH$ ou $-(C_3H_6O)_xH$, $R^1$ peut également signifier un alkyle en $C_1$ à $C_4$,

$R^2$ signifie l'hydrogène, un alkyle en $C_1$ à $C_{22}$ ou un groupe de formule $-(C_2H_4O)_xH$, $-(C_3H_6O)_xH$ ou $-CH_2CH_2CH_2NH_2$,

$R^3$ signifie l'hydrogène ou un groupe de formule $-(C_2H_4O)_xH$, $-(C_3H_6O)_xH$ ou $-CH_2CH_2CH_2NH_2$ ,

$R^4$ et $R^6$ signifient un alkyle en $C_1$ à $C_4$ ou un groupe de formule $-(C_2H_4O)_xH$ ou $-(C_2H_6O)_xH$,

$R^5$ et $R^7$ signifient un groupe de formule $-(C_2H_4O)_xH$ ou $-(C_3H_6O)_xH$, A un groupe de formule $-(CH_2)_n-$, $-(CH_2CH_2\ OCH_2CH_2)_n-$ ou $-(CH_2CH_2NHCH_2CH_2)_n-$,

x représente des nombres de 1 à 55 et n un nombre entier de 1 à 20, pour la protection préventive du bois.